(19) Europäisches Patentamt
European Patent Office
Office européen des brevets

(11) **EP 2 329 049 B1**

(12) # EUROPÄISCHE PATENTSCHRIFT

(45) Veröffentlichungstag und Bekanntmachung des Hinweises auf die Patenterteilung:
**18.07.2018  Patentblatt 2018/29**

(51) Int Cl.:
*C21C 5/52* *(2006.01)*       *F27D 19/00* *(2006.01)*
*F27B 3/28* *(2006.01)*       *F27B 3/08* *(2006.01)*

(21) Anmeldenummer: **09776084.7**

(22) Anmeldetag: **07.08.2009**

(86) Internationale Anmeldenummer:
**PCT/DE2009/001137**

(87) Internationale Veröffentlichungsnummer:
**WO 2010/022703 (04.03.2010 Gazette 2010/09)**

(54) **VERFAHREN ZUR SCHAUMSCHLACKENSTEUERUNG EINER ROSTFREISCHMELZE IN EINEM ELEKTROLICHTBOGENOFEN**

METHOD FOR CONTROLLING FOAMED SLAG IN A STAINLESS MELT IN AN ELECTRIC ARC FURNACE

PROCÉDÉ DE RÉGULATION DU LAITIER MOUSSANT D'UN BAIN DE FUSION D'ACIER INOXYDABLE DANS UN FOUR À ARC ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.08.2008   DE 102008045054**

(43) Veröffentlichungstag der Anmeldung:
**08.06.2011   Patentblatt 2011/23**

(73) Patentinhaber: **SMS group GmbH**
**40237 Düsseldorf (DE)**

(72) Erfinder: **REICHEL, Johann**
**40489 Düsseldorf (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**EP-A1- 0 637 634       WO-A1-01/72090**
**DE-U1- 20 017 930      JP-A- 7 166 222**
**US-A1- 2003 212 502**

**Beschreibung**

Die Erfindung betrifft ein Verfahren zur Schaumschlackensteuerung einer Rostfreischmelze in einem Elektrolichtbogenofen.

Die Vorteile einer gut schäumenden Schlacke im EAF sind weitgehend bekannt, wobei hierzu auf die WO 2007/087979 A1 verwiesen werden kann.

Beim Betreiben von Elektrolichtbogenöfen wird die Charge, d. h. vor allem Schrott, und Legierungen mit den Lichtbögen der Elektroden eingeschmolzen mit gleichzeitiger Bildung einer Schlacke. Die Schlacke erfüllt dabei neben ihrer Primärfunktion, d. h. der Entfernung von unerwünschten Bestandteilen aus der Schmelze, eine Schutzfunktion falls sie in einen schaumförmigen Zustand gebracht wird. In diesem Zustand umhüllt die Schlacke den Raum zwischen den Elektrodenspitzen und der Metalloberfläche und wegen ihrer schwachen Wärmeleitfähigkeit schützt die Feuerfest-Ausmauerung des Ofens vor der Strahlungsenergie des Elektrolichtbogens.

Die aufgeschäumte Schlacke reduziert stark die intensive Strahlung des Lichtbogens gegenüber der Wandung des Elektroofens und verbessert damit das Energieeinbringen in die metallische Schmelze. Somit wird die Haltbarkeit des Feuerfestmaterials des Ofens wesentlich verlängert.

Um diese Vorteile zu erreichen, muss die Schaumschlacke immer in einer vorbestimmten Höhe im Ofen vorhanden sein.

Aus der EP 637 634 A1 ist ein Verfahren zum Herstellen einer Metallschmelze bekannt, bei der die Höhe der Schaumschlacke akustisch bestimmt wird, und zwar durch Erfassung eines für das Schlackenschäumen charakteristischen Frequenzbereiches. Aus dem Vergleich des Meß-Schallpegels mit einem Referenz-Schallpegel ergeben sich dann Anhaltspunkte für die Steuerung der Schäummittelzugabe.

Ebenfalls mit der Bestimmung der Höhe der Schaumschlacke in einem Elektrolichtbogenofen befasst sich die WO 2007/009924 A1.

Hierbei wird als Messtechnik die Bestimmung des Körperschalls eingesetzt. WO0172090 offenbart ein Verfahren und Vorrichtung zum automatischen Steuern der Schlackenschäumung. Aufgabe der Erfindung ist es ein verbessertes Verfahren zur Schaumschlackensteuerung anzugeben.

Gelöst wird diese Aufgabe erfindungsgemäß dadurch, dass die Schlackenhöhe im Elektrolichtbogenofen thermographisch als Funktion der Zeit und Schlackenhöhe kontinuierlich erfasst wird und dass abhängig von der Temperatur und dem Temperaturgradienten die Zugabe von Schäummaterial gesteuert wird, wobei bei der Anzeige von einem Temperaturgradient mit positiven Vorzeichen die Zugabe des Materials mit einer konstanten Geschwindigkeit vorgenommen wird und bei Anzeige eines Temperaturgradienten mit negativem Vorzeichen oder mit Null die Zugabe des Materials komplett gestoppt oder abnehmend fortgesetzt wird. Die Erfindung betrifft somit ein Verfahren zur Schaumschlackensteuerung einer Rostfreischmelze in einem Elektrolichtbogenofen bei Zugabe von einem Schäummaterial anhand eines thermographischen Systems. Die Steuerung der Zugabe basiert auf optimaler Bildung der Schaumschlacke gemessen durch ihre Höhe. Die Höhe der Schlacke bewirkt eine Temperaturänderung eines Thermoelements. Das Thermoelement ist eingebaut in der Wandung des Elektrolichbogenofens und hat extrem hohe Wärmeleitfähigkeit. Somit ergibt sich ebenfalls die Möglichkeit den Temeperaturgradient zu messen.

Die Schlackenhöhe wird somit anhand einer kontinuierlichen Temperaturmessung mit dem Thermoelement erfasst. Seine schnelle Temperaturveränderung aufgrund der unterschiedlichen Schlackenhöhe wird auf Basis einer kabellosen Infrarotsignalübertragung an einen Empfänger im Kontrollstand empfangen. Entsprechen dem Temperaturverlauf wird die Zugabe des Schäummaterials gesteuert.

Die Erfindung soll nachfolgend unter Bezug auf die Zeichnungen erläutert werden.

Dabei zeigt:

Fig. 1      das generelle Prinzip des Meßsystems und
Fig. 2      das Prinzip der Schäummaterialzugabesteuerung

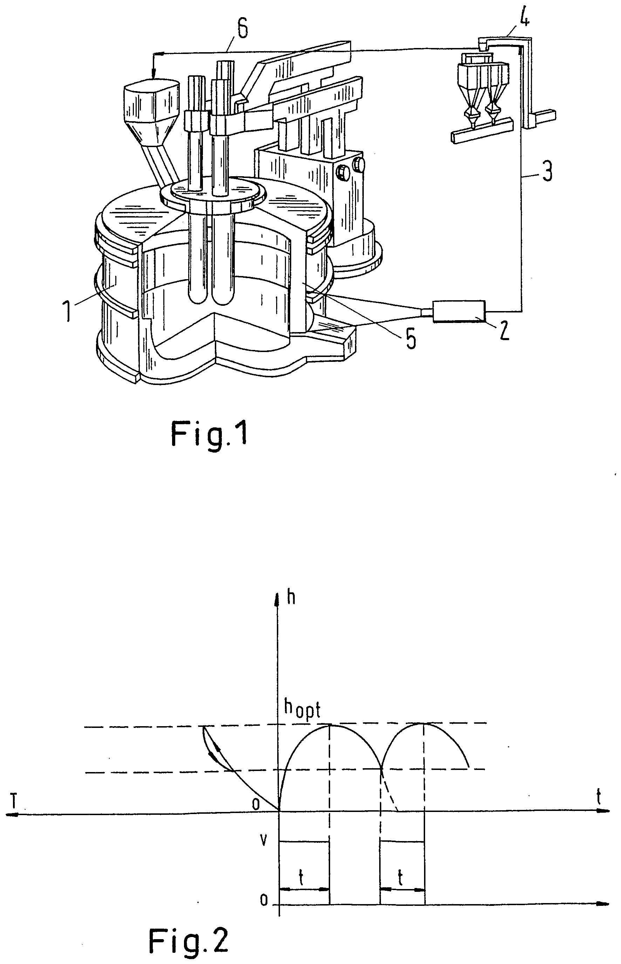

In der Figur 1 ist der Elektrolichtbogenofen, der hier im Einzelnen nicht beschrieben werden soll, ist mit 1 bezeichnet. Eine Infrarotkamera 2 empfängt die von dem Thermoelement 5, das in einem Bereich der Ofenwand, also einer Höhe angeordnet, die im üblichen Bereich der vorhandenenen bzw. notwendigen Schaumschlackenhöhe liegt, emittierte Infrarotstrahlung und gibt die Meßwerte als Steuersignale 3 an die Materialzugabeeinrichtung 4 weiter, die ihrerseits dann das Schäummaterial dem Elektrolichtbogenofen zuführt. Dies ist durch den Pfeil 6 angedeutet.

Die Figur 2 zeigt die Schlackenhöhe über der Zeitachse.

Die Schaumschlacke entwickelt sich quasi exponentiell entsprechend dem natürlichen Aufbau, wie die in der Figur 2 zu erkennen ist. Das Schäummaterial wird, wie erwähnt, über die Materialzugabeeinrichtung 4 in die Zone zwischen Schlacke und Metall eingeführt und unterliegt dem Lösungsprozess mit paralleler Reduktion des Eisenoxids.

Durch das Meßsystem wird die Schlackenhöhe durch eine Temperaturentwicklung an einem Thermoelement identifiziert wird. Die Temperatur des Thermoelements ist eine Funktion der Zeit und Schlackenhöhe, wie dies in den Gleichungen 1. und 2 wiedergegeben ist.

Das Meßsystem liefert:

- das Temperatursignal in Zeitfunktion :

$$T = f(t) = f'(h) \qquad (1)$$

- das Temperaturgradient in Zeitfunktion:

$$dT = df'(h) \qquad (2)$$

Das Thermoelement ist in der Wandung des Elektrolichbogenofens eingebaut und zeichnet sich durch eine extrem hohe Wärmeleitfähigkeit aus. Dadurch kann der Temperaturgradient ermittelt werden, siehe Gleichung 3.

Das Steuerungsystem liefert:

$$dT/dt = g(h,t) = df'(h)/dt \qquad (3)$$

Damit kann die

- die Zugabegeschwindigkeit dm/dt in (kg/min) - Gleichungen 4 und 5 -

$$dm/dt = v \text{ bei } T > T_{min} \text{ und } dT/dt \geq 0 \qquad (4)$$

$$dm/dt = 0 \text{ bei } T = T_{opt} \text{ und } dT/dt < 0 \qquad (5)$$

und die die Dauer der Zugabe t in (min) - Gleichungen 6 und 7 - bestimmt werden

$$\Delta t = t \text{ solange } dT/dt \geq 0 \qquad (6)$$

$$\Delta t = 0 \text{ solange } dT/dt < 0 \qquad (7)$$

Da die Thermografie ein berührungsloses Messverfahren ist, können auch weit entfernte Objekte abgebildet werden. Die IR-Signale der Kamera werden als Radiosignale im Leitstand empfangen und in die Steuerungsignale laut Gleichung 4-7 umgewandelt Solange sich der Gradient mit positiven Vorzeichen darstellt, was eine steigende Tendenz der Temperatur bedeutet, gleichzeitig aber auch einen ungehüllten Zustand der Elektroden, wird die Zugabe des Materials mit einer konstanten Geschwindigkeit vorgenommen. Ist der Temperaturgradient Null bzw. negativ wird die Zugabe des Materials komplett gestoppt oder abnehmend fortgesetzt.

**Patentansprüche**

1. Verfahren zur Schaumschlackensteuerung der Schlackenhöhe einer Rostfreischmelze in einem Elektrolichtbogenofen,
**dadurch gekennzeichnet,**
**dass** die Temperatur über eine kontinuierliche Temperaturmessung im Elektrolichtbogenofen thermographisch als Funktion der Zeit und Schlackenhöhe kontinuierlich erfasst wird und dass abhängig von der Temperatur und dem Temperaturgradienten die Zugabe von Schäummaterial gesteuert wird, wobei bei der Anzeige von einem Temperaturgradient mit positiven Vorzeichen die Zugabe des Materials mit einer konstanten Geschwindigkeit vorgenommen wird und bei Anzeige eines Temperaturgradienten mit negativem Vorzeichen oder mit Null die Zugabe des Materials komplett gestoppt oder abnehmend fortgesetzt wird.

**2.** Verfahren nach Anspruch 1,
**dadurch gekennzeichnet,**
**dass** die Temperatur mittels eines in die Ofenwandung eingesetzten Thermoelementes gemessen wird.

**3.** Verfahren nach Anspruch 2,
**dadurch gekennzeichnet,**
**dass** die vom Thermoelement emittierte Infrarotstrahlung über eine Wärmebildkamera ermittelt und als Steuersignal an die Schäummaterialzugabe weitergeleitet wird.

**Claims**

**1.** Method for foamed-slag control of the slag height of a stainless steel melt in an electric arc furnace, **characterised in that** the temperature is continuously detected by way of a continuous temperature measurement in the electric arc furnace thermographically as a function of time and slag height and that the addition of foam material is controlled in dependence on the temperature and the temperature gradient, wherein in the case of indication of a temperature gradient with a positive sign the addition of the material is undertaken at a constant speed and in the case of indication of a temperature gradient with a negative sign or zero the addition of the material is completely stopped or is continued in decreasing manner.

**2.** Method according to claim 1, **characterised in that** the temperature is measured by means of a thermoelement inserted into the furnace wall.

**3.** Method according to claim 2, **characterised in that** the infrared radiation emitted by the thermoelement is determined by way of a thermal image camera and is passed on as a control signal to the foam material addition means.

**Revendications**

**1.** Procédé pour le réglage du laitier moussant de la hauteur de laitier d'une masse fondue inoxydable dans un four à arc électrique, **caractérisé en ce qu'**on enregistre en continu la température via une mesure de la température en continu par voie thermographique dans le four à arc électrique en fonction du temps et de la hauteur du laitier et **en ce qu'**on règle en fonction de la température et du gradient de température, l'addition de matière en mousse, dans lequel lors de l'indication d'un gradient de température précédé d'un signe positif, on procède à l'addition de la matière à une vitesse constante et lors de l'indication d'un gradient de température nul ou précédé d'un signe négatif, on arrête complètement l'addition de la matière ou on la poursuit en la diminuant.

**2.** Procédé selon la revendication 1, **caractérisé en ce qu'**on mesure la température au moyen d'un thermocouple incorporé dans la paroi du four.

**3.** Procédé selon la revendication 2, **caractérisé en ce que** le rayonnement infrarouge déterminé par le thermocouple est déterminé par l'intermédiaire d'une caméra thermique et est transmis sous la forme d'un signal de commande à l'addition de matière en mousse.

Fig.1

Fig.2

**IN DER BESCHREIBUNG AUFGEFÜHRTE DOKUMENTE**

**In der Beschreibung aufgeführte Patentdokumente**

- WO 2007087979 A1
- EP 637634 A1
- WO 2007009924 A1
- WO 0172090 A